# EUROPEAN PATENT SPECIFICATION

(11) **EP 0 348 956 B1**
(45) Date of publication and mention of the grant of the patent: **21.09.1994**
(21) Application number: 89111802.8
(22) Date of filing: 28.06.1989
(51) Int. Cl.: H04M 1/70

(54) **A device for the exclusive use of a single telephone line by a telephone set in installations comprising a plurality of telephone sets**
Vorrichtung zur ausschliesslichen Benutzung einer einzelnen Telefonleitung durch einen Fernsprechapparat in Einrichtungen mit einer Vielzahl von Fernsprechapparaten
Dispositif pour l'usage exclusif d'une ligne téléphonique unique par un appareil téléphonique dans des installations comportant une pluralité d'appareils téléphoniques

(30) Priority: 29.06.1988 IT 6761388
(43) Date of publication of application: 03.01.1990
(73) Proprietor: CSELT Centro Studi e Laboratori Telecomunicazioni S.p.A., I-10148 Turin (IT)
(72) Inventor: Melindo, Flavio, Torino (IT)
(74) Representative: Riederer Freiherr von Paar zu Schönau, Anton

(56) References cited:
- EP-A- 0 182 393
- DE-A- 3 628 922
- US-A- 4 332 983
- US-A- 4 747 128

## Description

The present invention relates to subscribers' telephone installations and more particularly to a device for the exclusive use of a single telephone line by a telephone set in installations comprising a plurality of telephone sets, such device being connected between the telephone line and each telephone set, and comprising means for assigning the line to the first set who goes into off-hook condition and for isolating the others till said first set goes into on-hook condition again, without any priority determined by the insertion points of the telephone sets on the line.

In telephone installations using a single line, such as those installed in private subscribers' premises, a plurality of telephone sets, e. g. one set in each room of the house, is often desired. Were the sets simply connected in parallel to the line, call secrecy will be impossible, since all sets would receive the same signals. To overcome this disadvantage, the sets in multiple-set installations are usually cascaded; moreover particular switch contacts are provided, which are operated by the hook and are so arranged that, when the handset is lifted, the connection towards downstream sets is interrupted and the downstream line is short-circuited to avoid cross-talk. This solution optimally resolves the problem of secrecy in respect of downstream telephone sets, but not as far as upstream telephone sets are concerned: in fact, if the handset of an upstream telephone is lifted, the latter replaces the others in the conversation, clearly disturbing the person who was making a call. In addition this system is expensive, since each telephone set must be equipped with switching contacts and with three connection wires; if the set is equipped with a plug, special three-pole plugs are necessary, capable of automatically extending the line when the telephone set is disconnected.

Furthermore EP-A 0 182 393, US-A 4 747 128 and US-A 4 322 983 show a prior art technique, to be seen easiest in EP-A 182 393. Therein, the telephone set is connected in series with a bridge rectifier circuit, the bridge diagonal being short-circuited by a thyristor which is triggered via a voltage divider in series with a zener diode, which series connection is connected in parallel to the thyristor. In series with the telephone set, there is also an independent resistor for causing a voltage drop. Such combination does not fully isolate the telephone set from the line, especially if the line is not perfectly balanced, so that listening to a conversation taking place at a different telephone set can not be fully excluded.

Also DE-A 36 28 922 shows a privacy protector technique, in this case using a single device controlling a plurality of telephones. The device operates a plurality of switches connected each in series with one of the telephone sets.

The disadvantages of the prior art techniques are overcome by the device provided by the present invention, which allows the secrecy of a call originated from a telephone set to be maintained regardless of its point of insertion on the line and which does not require the use of special plugs or additional contacts in the telephone sets, which can be of the two-wire type: this is of advantage from the installation simplicity and cost standpoint. In addition the device is considerably simple and therefrom cheap, and is easy to manufacture as an integrated circuit.

The present invention provides a device for the exclusive use of a single telephone line by a telephone set in installations comprising a plurality of telephone sets which device is characterized in that said line-assigning and isolating means comprises:
- a current sensor connected in series with the telephone set between said telephone set and the line, to detect current flow towards the line upon the telephone handset being lifted, in order to detect if the telephone associated therewith is off-hook or not;
- a voltage sensor, connected in parallel with the line, to discriminate between a line voltage corresponding to idle line condition and a voltage, lower than the preceding voltage, corresponding to seized line condition;
- an isolating circuit, connected between the line and the telephone set and connected to both the current sensor and the voltage sensor, to isolate the telephone set from the line when the voltage detected by the voltage sensor corresponds to a seized line condition and the current sensor does not detect any current flow between the telephone and the line, until an idle line condition is detected by the voltage sensor.

The device also comprises means for signalling the seized line condition, connected to the isolating circuit and operated when such a circuit isolates the telephone set from the line; useless seizure attempts are so avoided and there is immediately signalled when the line becomes idle again.

The foregoing and other characteristics of the present invention will become more evident from the following description of a preferred embodiment thereof, given by way of non limiting example, with reference to the annexed drawing, wherein:
- Fig. 1 is a block diagram of an installation equipped with the device provided by the invention;
- Fig. 2 is a possible circuit diagram of said device.

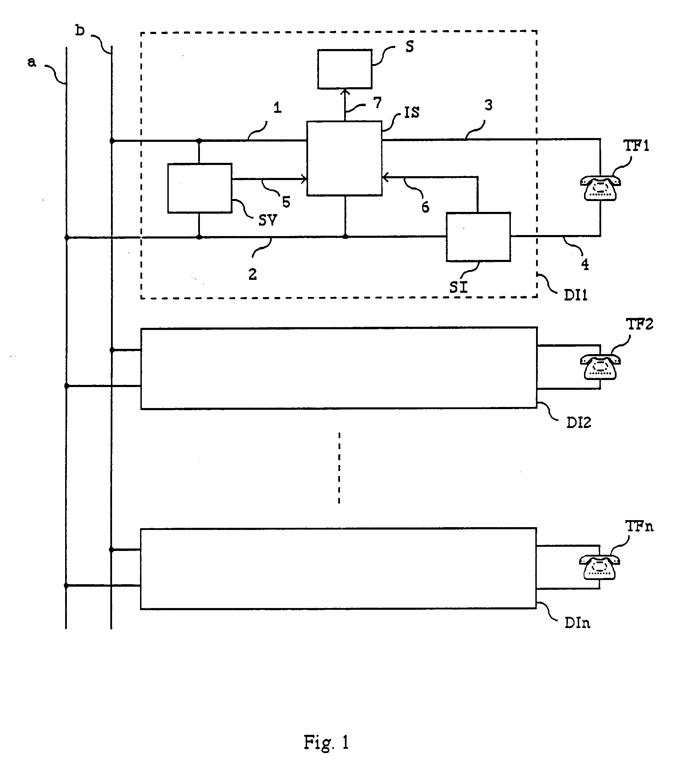

References a and b in Fig. 1 denote the two wires forming a conventional telephone line; TF1, TF2...TFn denote n telephone sets sharing said line, DI1, DI2...DIn denote n devices according to the invention, each connected between the line and a telephone set. As shown in DI1, the device comprises: a voltage sensor SV which can discriminate between open circuit line voltage and seized line voltage; a current sensor SI capable of detecting whether the current flowing in it reaches a value corresponding to telephone off hook condition; a circuit IS capable of isolating telephone set TF1 from the line when the latter is seized, but the handset is on hook; a circuit S signalling the isolated condition of said telephone set. References 1 - 7 denote the wires connecting the circuits in DI1 to one another, to line a, b and to the telephone set.

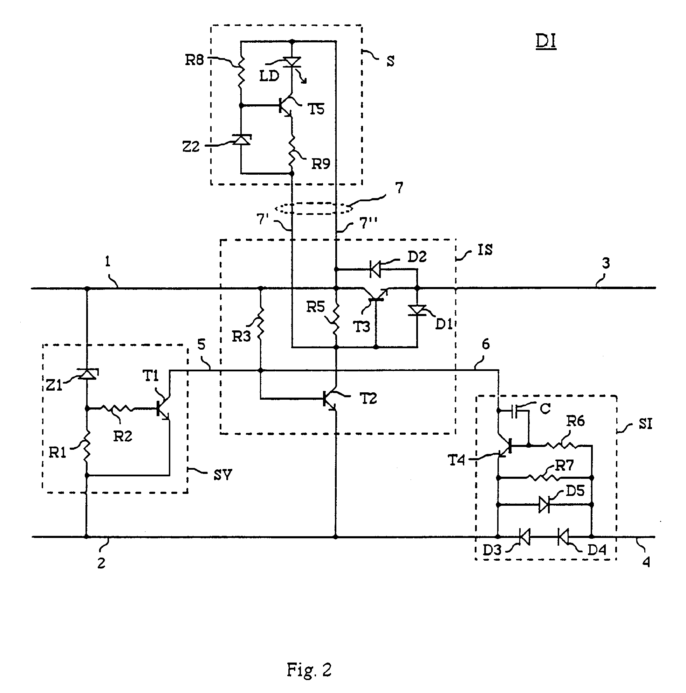

In the following description of the operation, the telephone sets are considered to be equivalent to the series of a resistor and a switch, which is open when the handset is on hook and closed when the handset is off hook. Under on hook conditions of all sets TF1...TFn (open telephone circuit), the voltage between line wires a and b is about the same as the telephone exchange battery voltage (typically 60 or 48 V); sensor SV recognizes that such a voltage corresponds to the idle state and through conductor 5 brings isolating circuit IS into such conditions that said isolating circuit connects conductors 1 and 3; since current sensor SI, as will be better seen in Fig.2, is designed so as always to allow current flow between conductors 2 and 4, telephone set TF1 is connected to the line. Similarly, all remaining telephone sets are connected to said line, so that the arrival of a possible call operates the ringer of all sets.

Supposing that telephone set TF1 is the first to go into off hook condition, current flows through the circuit composed of wire b, conductor 1, isolating circuit IS, telephone set TF1, conductor 4, current sensor SI, conductor 2 and wire a. Current sensor SI detects the current flow and through conductor 6 makes isolating circuit IS maintain conductors 1 and 3 connected; telephone set TF1 remains connected to the telephone line as previously indicated.

Under this condition (seized line), the voltage between line wires a and b becomes much lower (typically 10-15 V for 60 V installations and 8-12 V for 48 V installations); as a consequence sensor SV emits a signal on conductor 5 to make isolating circuit IS isolate telephone set TF1. Yet isolating circuit IS is such that it is operated (i.e. it isolates the telephone set) only if the line is seized while the handset is not off hook; therefore, under the described condition conductors 1 and 3 remain connected and telephone set TF1 can normally effect the call.

If instead of TF1 anyone of the remaining telephone sets TFi (2≦i≦n) goes into off hook condition, the situation described above holds good for device DIi. on the contrary in TF1 current sensor SI does not detect any current flow in the telephone set and as a consequence the signal from sensor SV operates isolating circuit IS, which breaks the connection between conductors 1 and 3 and short-circuits conductors 3 and 2, so as to completely isolate telephone set TF1. At the same time as the isolating circuit, also device S is operated and signals the isolated set condition. This situation takes place on all remaining telephone sets and the line remains in exclusive use of the telephone set whose handset has been lifted first, independently of its position with respect to the others.

A possible circuit embodiment of the device is shown in Fig. 2, which also indicates the individual functional blocks SV, SI, S and IS, already described with reference to the preceding Figure.

Block SV is composed of transistor T1, resistors R1 and R2 and zener diode Z1. The threshold voltage of Z1 lies between idle line voltage and seized line voltage; as a consequence, if the line is idle, the zener diode is conducting and transistor T1 saturates, while if the line is seized Z1 does not conduct and T1 remains inhibited. The resistances of resistors R1 and R2 are sufficiently high in order the current flowing in them is not considered by the telephone exchange as being due to a poor line insulation.

Current sensor SI consists of transistor T4 together with diodes D3 and D4 and resistors R6 and R7. Diodes D3, D4, as shown, keep the circuit between conductors 2 and 4 always closed. If no current flows from conductor 3 to conductor 2 through conductor 4 (on hook condition), there is no voltage drop across diodes D3 - D4 and hence transistor T4 is inhibited; if on the contrary there is a current flow between conductors 3 and 4, transistor T4 saturates. Diode D5 allows a current flow also in the reverse direction, what takes place during the arrival of the a.c. ringing current, while capacitor C has smoothing functions to avoid oscillatory phenomena of the whole device.

Isolating circuit IS is made of transistors T2 and T3, resistors R3 and R5 and diodes D1, D2. If at least one of transistors T1 and T4 is saturated, transistor T2 is inhibited; under these conditions transistor T3, operating as an emitter follower, transfers onto conductor 3 the voltage present on conductor 1, thus extending the line towards the telephone set connected between conductors 3 and 4. If on the contrary both transistors T1 and T4 are inhibited, T2 saturates, thereby inhibiting T3 and short-circuiting conductors 3 and 2 via diode D1 and T2 itself; hence the telephone set placed between conductors 3 and 4 remains completely isolated. Diode D2 allows the reverse flow of the ringing current, exactly alike D5.

Signalling circuit 5 extracts the voltage across resistor R5 through wires 7′ and 7˝ forming connection 7 of Fig. 1. Circuit S is composed of light-emitting diode LD, while transistor T5, together with zener diode Z2 and resistors R8 and R9, forms a current generator. When the voltage applied between 7′ and 7˝ exceeds the threshold voltage of Z2 (condition occurring when T2 is saturated), led LD is traversed by a constant current, independently of the applied voltage itself, and emits light, thereby signalling the line seizure.

The diagram of Fig. 2 clearly shows the simplicity of the device according to the invention; it is also evident that the device, which is formed solely of diodes, transistors, resistors and capacitors and comprises a very limited number of components, can be easily manufactured as an integrated circuit.

It is clear that what described has been given only by way of a non-limiting example and variations and modifications are possible without going out of the scope of the invention.

## Claims

1. A device for the exclusive use of a single telephone line by a telephone set in installations comprising a plurality of telephone sets, such device (DI1,...DIn) being connected between the telephone line (a, b) and each telephone set (TF1 ,...TFn), and comprising means (SI, SV, IS) for assigning the line to the first set which goes into off-hook condition and for isolating the others till said first set goes into on hook condition again, without any priority determined by the insertion points of the telephone sets on the line, characterized in that said line-assigning and isolating means (SV, SI, IS) comprises:
- a current sensor (SI), connected in series with the telephone set (TF1,...TFn), between said telephone set and the line (a, b), to detect current flow toward the line upon the telephone handset being lifted, in order to detect if the telephone associated therewith is off-hook or not;
- a voltage sensor (SV), connected in parallel with the line, to discriminate between a line voltage corresponding to idle line condition and a voltage, lower than the preceding voltage, corresponding to seized line condition;
- an isolating circuit (IS), connected between the line and the telephone set (TF1 ,...TFn) and connected to both the current sensor (SI) and the voltage sensor (SV), to isolate the telephone set from the line when the voltage detected by the voltage sensor corresponds to the seized line condition and the current sensor does not detect any current flow between the telephone set and the line, the circuit maintaining the isolated state until an idle line condition is detected by the voltage sensor (SV).

2. A device as claimed in claim 1, characterized in that it further comprises means (S) for signalling the seized line condition, which means is connected to the isolating circuit (IS) and is operated when such a circuit (IS) isolates the telephone set from the line.

3. A device as claimed in claim 1 or 2, characterized in that said line-assigning and isolating means (SV, SI, IS) and said signalling means (S) are manufactured as a single integrated circuit

## Patentansprüche

1. Vorrichtung zur ausschließlichen Benutzung einer einzigen Telefonleitung durch einen Fernsprechapparat in Installation mit einer Vielzahl von Fernsprechapparaten, wobei derartige Vorrichtungen (DI1, .... DIn) zwischen die Telefonleitung (a, b) und jeden Fernsprechapparat (TF1, ..., TFn) eingeschaltet sind und eine Einrichtung (SI, SV, IS) zum Zuweisen der Leitung an den ersten Apparat, der in den abgehobenen Zustand übergeht, und zum Abtrennen der anderen, bis dieser erste Apparat wieder in den aufgelegten Zustand zurückkehrt, umfassen, und wobei durch die Anschlußpunkte der Fernsprechapparate an die Leitung keine Priorität festgelegt ist, dadurch gekennzeichnet, daß die die Leitung zuweisende und abtrennende Einrichtung (SV, SI, IS) folgende Teile umfaßt:
- einen Stromsensor (SI), der in Serie mit dem Fernsprechapparat (TF1, ..., TFn) zwischen diesem und der Leitung (a, b) eingeschaltet ist und einen bei Abheben des Fernsprech-Handapparats zur Leitung fließenden Strom feststellt, um zu erkennen, ob der damit verbundene Fernsprecher im abgehobenen Zustand ist oder nicht;
- einen Spannungssensor (SV), der parallel zur Leitung geschaltet ist und zwischen einer dem Leerlauf-Leitungszustand entsprechenden Leitungsspannung und einer im Vergleich zu dieser Leitungsspannung niedrigeren Spannung, die dem belegten Leitungszustand entspricht, unterscheidet;
- eine abtrennende Schaltung (IS), die zwischen die Leitung und den Fernsprechapparat (TF1, ..., TFn) geschaltet ist, sowohl mit dem Stromsensor (SI) als auch mit dem Spannungssensor (SV) verbunden ist und den Fernsprechapparat von der Leitung trennt, wenn die vom Spannungssensor festgestellte Spannung dem belegten Leitungszustand entspricht und der Stromsensor keinen Strom zwischen dem Fernsprechapparat und der Leitung feststellt, wobei diese Schaltung den abgetrennten Zustand aufrechterhält, bis vom Spannungssensor (SV) der Leerlauf-Leitungszustand festgestellt wird.

2. Vorrichtung nach Anspruch 1, dadurch gekennzeichnet, daß sie weiterhin eine Einrichtung (S) zum Signalisieren des belegten Leitungszustands umfaßt, die mit der abtrennenden Schaltung (IS) verbunden ist und betätigt wird, wenn die abtrennende Schaltung den Fernsprechapparat von der Leitung trennt.

3. Vorrichtung nach Anspruch 1 oder 2, dadurch gekennzeichnet, daß die die Leitung zuweisende und abtrennende Einrichtung (SV, SI, IS) und die signalisierende Einrichtung (S) als einziger integrierter Schaltkreis hergestellt sind.

## Revendications

1. Dispositif pour l'usage exclusif d'une ligne téléphonique unique par un appareil téléphonique dans des installations comportant une pluralité d'appareils téléphoniques, le dispositif (DI1...DIn) étant connecté entre la ligne téléphonique (a, b) et chaque appareil téléphonique et comportant des moyens (SI, SV, IS) pour affecter la ligne au premier appareil qui décroche et pour isoler les autres jusqu'à ce que le premier appareil raccroche, sans aucune priorité déterminée par les points d'insertion des appareils téléphoniques sur la ligne, caractérisé en ce que les moyens (SI, SV, IS) d'affectation de la ligne et d'isolement comprennent:
- un capteur de courant (SI) connecté en série avec l'appareil téléphonique (TF1...TFn), entre celui-ci et la ligne, pour détecter le passage de courant vers la ligne lorsqu'on décroche le combiné, pour détecter si l'appareil lui associé est décroché ou non;
- un capteur de tension (SV), connecté en parallèle sur la ligne, pour discriminer une tension de ligne correspondant à la condition de ligne libre, et une tension inférieure à la précédente, correspondant à la condition de ligne prise;
- un circuit d'isolement (IS), connecté entre la ligne et l'appareil téléphonique (TF1...TFn) et connecté aussi bien au capteur de courant (SI) qu'au capteur de tension (SV), pour isoler l'appareil téléphonique de la ligne lorsque la tension détectée par le capteur de tension correspond à la condition de ligne prise et le capteur de courant ne détecte pas de passage de courant entre l'appareil téléphonique et la ligne, le circuit maintenant l'état jusqu'à ce qu'une condition de ligne libre est détectée par le capteur de tension (SV).

2. Dispositif selon la revendication 1, caractérisé en ce qu'il comporte en outre des moyens (S) pour signaler la condition de ligne prise, qui sont connectés au circuit d'isolement (IS) et sont actionnés lorsque ce circuit (IS) isole l'appareil téléphonique de la ligne.

3. Dispositif selon la revendication 1 ou 2, caractérisé en ce que les moyens (SV, SI, IS) d'affectation de la ligne et d'isolement et les moyens (S) de signalisation sont réalisés sous la forme d'un circuit intégré unique.
